(19) **Europäisches Patentamt**

**European Patent Office**

**Office européen des brevets**

(11) Veröffentlichungsnummer: **0 300 442 B1**

(12) **EUROPÄISCHE PATENTSCHRIFT**

(45) Veröffentlichungstag der Patentschrift: **06.05.92**

(21) Anmeldenummer: **88111672.7**

(22) Anmeldetag: **20.07.88**

(51) Int. Cl.⁵: **A47J 43/10**, A47J 43/28

(54) **Schneebesen.**

(30) Priorität: **21.07.87 DE 3724009**

(43) Veröffentlichungstag der Anmeldung:
**25.01.89 Patentblatt 89/04**

(45) Bekanntmachung des Hinweises auf die
Patenterteilung:
**06.05.92 Patentblatt 92/19**

(84) Benannte Vertragsstaaten:
**AT CH DE ES GB IT LI NL SE**

(56) Entgegenhaltungen:
CH-A- 241 195
FR-A- 403 054
FR-A- 403 823
US-A- 1 617 787
US-A- 2 045 171

(73) Patentinhaber: **W.F. KAISER U. CO. GMBH**
**Elisenstrasse 5**
**W-5408 Nassau/Lahn(DE)**

(72) Erfinder: **Die Erfinder haben auf ihre Nen-**
**nung verzichtet**

(74) Vertreter: **Vollbach, Hans, Dipl.-Ing. et al**
**Patentanwälte Dipl.-Ing. Buschhoff Dipl.Ing**
**Hennicke Dipl.-Ing. Vollbach Kaiser-**
**Wilhelm-Ring 24**
**W-5000 Köln 1(DE)**

**Beschreibung**

Die Erfindung betrifft einen Schneebesen zum Schlagen von Eiweißschnee, Sahne, Cremes usw., bestehend aus an ihren Griffteilen in einem Griffgelenk verbundenen Einzelbesen, mit deren Griffteilen den Schlagkopf bildende elastische Drahtelemente verbunden sind.

Schneebesen werden bekanntlich zum Schlagen von Schnee, Cremes, Sahne und sonstigem Schlaggut, daneben aber auch nicht selten zum behutsamen Mischen von Koch- oder Backmassen u.dgl. verwendet. Bei den gebräuchlichen Schneebesen sind die schlaufenförmig geformten Drahtelemente einander überkreuzend so am Griffteil angeordnet, daß sie gemeinsam einen etwa birnenförmigen Schlagkopf in Gestalt eines Drahtkorbes bilden. Solche Schneebesen sind zwar seit langem gebräuchlich, aber dennoch nicht frei von Nachteilen. Vom ergonomischen Standpunkt her sind die Schneebesen ungünstig, da ihre Handhabung mit übermäßigem Kraftaufwand verbunden ist und praktisch den gesamten Arm bis zur Schulter beansprucht. Das Schlagen (Durchlüften) des Koch- oder Backgutes od.dgl. ist daher recht ermüdend. Dennoch ist der Wirkungsgrad des traditionellen Schneebesens nicht besonders hoch, so daß die Schlagarbeit auch verhältnismäßig zeitaufwendig ist. In der Praxis müssen in der Küche Schneebesen verschiedener Größen bereitgehalten werden, was einen erhöhten Aufwand für die Bereitstellung, Unterbringung und für die Spülreinigung dieser Geräte bedeutet. Die herkömmlichen Schneebesen unterliegen auch einer gewissen Alterung. Wenn die Elastizität der den Schlagkopf bildenden Drahtelemente nachläßt und der Drahtkorb sich flachdrückt, vermindert sich der Wirkungsgrad des Schneebesens sehr rasch.

Es sind in der Vergangenheit im Stand der Technik Schneebesen auch in anderen Ausführungen vorgeschlagen worden. Beispielsweise ist aus der CH-A-241 195 ein Schneebesen bekannt, der aus zwei Einzelbesen besteht, die in einem Griffgelenk mit zugeordneten Gelenkfeder dauerhaft so miteinander verbunden sind, daß sie mit ihren von U-förmig gebogenen Drahtelementen gebildeten gemuldeten Schlagkopfteilen eine Greiferzange (Gebäckzange) bilden. Auch ist es aus dem DE-U-1 970 147 bekannt, einen Schneebesen aus zwei Halbteilen zu bilden, die sich zum Zwecke der Reinigung voneinander trennen lassen. Zum Gebrauch des Schneebesens werden die Halbteile zusammengefügt und an ihren halbzylindrischen Griffteilen mittels einer Aufsteckhülse verbunden. Es entsteht dann ein Schneebesen mit einem etwa birnenförmigen Schlagkopf.

Weiterhin sind Schneebesen in verschiedenen Ausführungen bekannt, deren Schlagkopf aus gewellten oder zu Einzelschleifen ausgeformten Drahtelementen besteht (vgl. FR-A-403 054, FR-A-737 007, US-A-2 562 380, US-A-1 895 833).

Schließlich ist aus der FR-A-403 823 ein Teigspachtel seit langem bekannt, der aus mehreren in einem Gelenk verbundenen Einzelspachteln in einer solchen Anordnung besteht, daß sich die Einzelspachtel im Gelenk fächerartig gegeneinander verschwenken lassen, um die Arbeitsbreite des Spachtels zu verändern bzw. den unterschiedlichen Behältergrößen anpassen zu können. Die Einzelspachtel sind hier im Abstand zu ihrem Gelenk über scherenartige Getriebelenker mit Kulissenführungen und einer Gewindeverstellung mit dem eigentlichen Griffstück verbunden, so daß durch Drehen des Griffstücks die Einzelspachtel fächerartig aus- oder elngespreizt werden können. Es handelt sich hier um ein verhältnismäßig bauaufwendiges und nur schwer zu reinigendes Arbeitsgerät.

Aufgabe der Erfindung ist es, den Schneebesen der eingangs genannten Art so auszugestalten, daß er bei vergleichsweise einfacher Ausbildung verbesserte Gebrauchseigenschaften aufweist, insbesondere sich ohne komplizierte Mechanik unterschiedlichen Größen der das Schlaggut aufnehmenden Gefäße anpassen läßt.

Diese Aufgabe wird erfindungsgemäß dadurch gelöst, daß die Einzelbesen zur Einstellung der Arbeitsbreite des Schlagkopfes im Griffgelenk etwa fächerförmig ausspreizbar und voneinander lösbar miteinander verbunden sind.

Der erfindungsgemäße Schneebesen ist also nach Art eines Fächers in seiner Arbeitsbreite einstellbar, indem die Einzelbesen z.B. von der vollen Überdeckung bis zu unterschiedlichen Teilüberdeckungen oder auch bis zur Aufhebung der Überdeckung ihrer von Drahtelementen gebildeten Schlagteile mehr oder weniger weit gegeneinander fächerartig ausgespreizt werden. Damit ist der Schneebesen innerhalb verhältnismäßig weiter Grenzen auch unterschiedlichen Größen und Formen der das Schlaggut aufnehmenden Gefäße ohne weiteres anpaßbar. Der erfindungsgemäße Schneebesen ist daher als einfacher handbetätigter Schneebesen bei allen im Küchenbereich üblichen Gefäßgrößen bis gegebenenfalls hin zur Tassengröße verwendbar. Er benötigt zur fächerartigen Verschwenkung der Einzelbesen keine aufwendige und schwer zu reinigende Einstellmechanik. Da die Einzelbesen im Griffgelenk leicht lösbar miteinander verbunden sind, lassen sie sich auch getrennt voneinander verwenden, insbesondere dann, wenn sie in besonders kleinen Gefäßen, wie Tassen od.dgl., zur Anwendung kommen. Die Verbindung der Einzelbesen in einem an ihrem Griff angeordneten Gelenk, also in einem Griffgelenk, ermöglicht ein leichtes Ausspreizen oder Einspreizen der Einzelbesen durch Handbetätigung ohne Verwendung einer besonderen Betätigungsmechanik. Im zusammengesteckten Zustand bilden die Einzelbesen gemeinsam einen Schlagkopf größerer Abmessungen, der sich für größere Schüssel- oder Topfgrößen eignet. Das vorgenannte Griffgelenk wird zweckmäßig als einfaches Steckgelenk od.dgl. ausgebildet. Zur Sicherung der Verbindung kann eine einfache Klemmschraube od.dgl. vorgesehen werden. Die lösbare Verbindung der Einzelbesen zu dem fächerartigen Schneebesen erleichtert auch die Reinigung desselben.

Bei dem erfindungsgemäßen Schneebesen werden die Einzelbesen zweckmäßig als Flachbesen ausgeführt, deren den Schlagkopf bildende Drahtelemente im wesentlichen in einer gemeinsamen Ebene nebeneinanderliegen, die etwa parallel zur Fächerebene verläuft, d. h. zu der Ebene, zu der sich die Einzelbesen fächerartig gegeneinander ausspreizen lassen. Im Verbindungszustand überdecken sich die Flachbesen mit ihren Schlagkopfteilen, wenn die Einzelbesen nicht gegeneinander ausgespreizt sind. Jeder Einzelbesen weist zweckmäßig mehrere im Seitenabstand zueinander angeordnete Drahtelemente auf, die den flachen Schlagkopf des Einzelbesens bilden.

Die Drahtelemente der Einzelbesen erhalten zweckmäßig an ihrem dem Griffteil abgewandten Endbereich quer zur Drahtachse gerichtete örtliche Drahtausformungen, wobei die freien Enden der Drahtelemente, quer zur Achse des Schneebesens gesehen, im Abstand nebeneinanderliegen. Bei dieser Ausgestaltung des Schneebesens wird der Arbeits- bzw. Schlagkopf also von einzelnen Drahtelementen gebildet, die im Bereich ihrer freien Enden örtliche Drahtausformungen aufweisen, welche die Schlag- und Durchlüftungswirkung des Schneebesens erheblich erhöhen, wobei die Drahtelemente im übrigen Längenbereich bis zu ihrer Einbindungsstelle am Griffteil dagegen keine Querausformungen aufzuweisen brauchen. Anstelle von Drahtschlaufen, die gemeinsam einen Drahtkorb bilden, wobei die Scheitelpunkte der sich kreuzenden Drahtschlaufen am freien Ende der Drahtelemente im wesentlichen auf der Achse des Schneebesens liegen, wird die Anordnung bei dem erfindungsgemäßen Schneebesen so getroffen, daß die Drahtelemente an ihren gegeneinander frei beweglichen Arbeitsenden ohne Überkreuzung im wesentlichen neben- oder hintereinanderliegen (quer zur Achse des Schneebesens gesehen), zweckmäßig derart, daß sie zumindest angenähert einen Flachbesen bilden. Ein solcher Schneebesen mit flachem Schlagkopf läßt sich bei Gebrauch ohne besondere Anstrengung, ähnlich einem Luftfächer, allein mit der Hand ohne gleichzeitigen ermüdenden Einsatz des ganzen Armes bewegen, so daß das Schlagen des Schlaggutes ohne Ermüdung möglich ist.

Bei einer besonders vorteilhaften und daher bevorzugten Ausführungsform der Erfindung bestehen die Drahtausformungen aus Einzel- oder Mehrfachschleifen der Drahtelemente. Eine solche Formgebung der Drahtelemente an deren freien Arbeitsenden führt zu einer deutlichen Verbesserung der Schlag- und Durchlüftungswirkung und damit zu einer Erhöhung des Wirkungsgrades des Schneebesens, so daß sich beim Schlagvorgang auch eine deutliche Zeitersparnis ergibt bzw. ein besseres Schlagergebnis erreichen läßt. Es besteht aber auch die Möglichkeit, die Drahtelemente mit Drahtausformungen anderer Art zu versehen. Beispielsweise können die Drahtelemente an ihren Arbeitsenden Wellungen, spiralförmige Wendelungen od.dgl. oder Kombinationen dieser Ausformungen erhalten. Werden die Drahtelemente im Endbereich zu Schleifen bzw. Ösen gewickelt, wie dies bevorzugt vorgesehen ist, so können sie gleichzeitig im Bereich dieser Schleifen geriffelt, gewellt oder auch gewendelt werden. Auch besteht die Möglichkeit, einen Teil der Drahtelemente mit gewellten oder gewendelten Drahtausformungen und einen anderen Teil der Drahtelemente mit schleifenförmigen Drahtausformungen zu versehen, obwohl die Verwendung von Drahtelementen mit gleichartigen Ausformungen im allgemeinen vorzuziehen ist. Es empfiehlt sich außerdem, die Drahtelemente gleich lang auszubilden.

Bei einer bevorzugten Ausführungsform der Erfindung sind die Drahtelemente etwa U-förmig gebogen, wobei ihre im Griffteil eingebundenen Schenkel an ihren dem Griffteil abgewandten und die örtlichen Drahtausformungen aufweisenden Enden über U- oder schleifenförmige Umbiegungen einstückig verbunden sind.

Die Erfindung wird nachfolgend im Zusammenhang mit den in der Zeichnung dargestellten Ausführungsbeispielen näher erläutert. In der Zeichnung zeigen:

Fig. 1      einen erfindungsgemäßen Schneebesen in perspektivischer Darstellung und in der Arbeitshaltung beim Schlagen eines Schlaggutes;

Fig. 2 und 3      den Schneebesen nach Fig. 1 in zwei um 90° versetzten Seitenansichten;

Fig. 4      den Schneebesen nach den Fig. 1 bis 3 mit gegeneinander fächerartig ausgespreizten Einzelbesen;

Fig. 5      eine Einzelheit der Verbindung der Einzelbesen am Griffgelenk in einer Ansicht;

Fig. 6 und 7     in einer Ansicht auf die Draht-elemente des erfindungsgemä-ßen Schneebesens verschiede-ne Ausgestaltungsformen der Endbereiche der Drahtelemente.

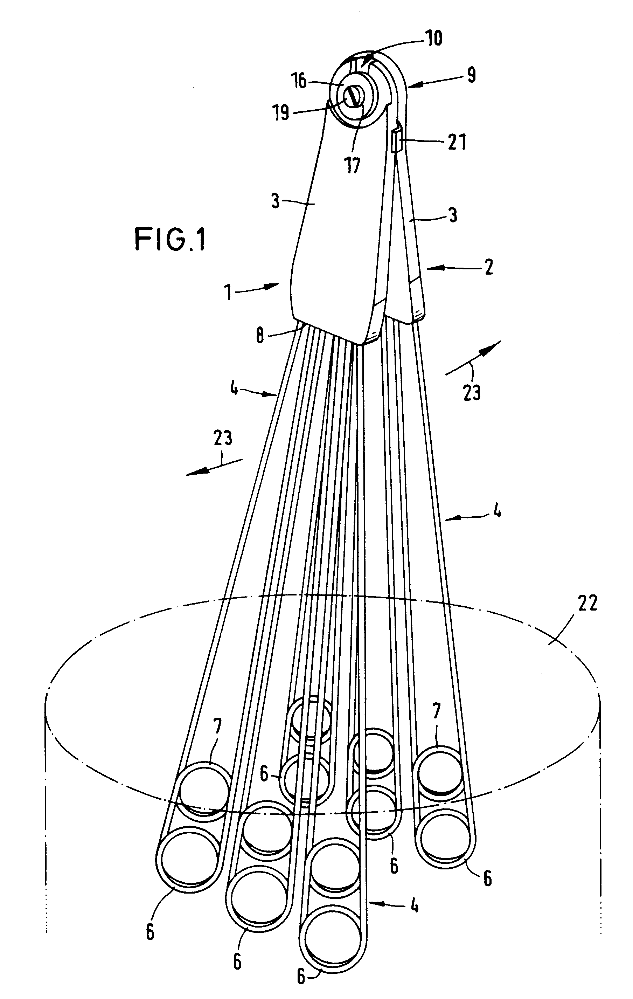

Der in den Fig. 1 bis 5 gezeigte Schneebesen besteht aus zwei Einzelbesen 1 und 2 gleicher Ausbildung, die zu einem in der Arbeitsbreite des Schlagkopfes einstellbaren Schneebesen verbunden sind. Jeder Einzelbesen 1 und 2 besteht aus einem Griffteil 3 und mehreren mit dem zugehörigen Griffteil 3 verbundenen Drahtelementen 4, deren freie Enden den Arbeits- bzw. Schlagkopf des Schneebesens bilden. Die Drahtelemente 4 werden zweckmäßig aus Edelstahldrähten gefertigt, obwohl auch mit Kunststoff umhüllte Stahldrähte oder auch nur Kunststoffdrähte verwendet werden könnten.

Bei dem gezeigten Ausführungsbeispiel weist jeder Einzelbesen 1 bzs. 2 an seinem Griffteil 3 drei Drahtelemente 4 auf, die jeweils von einem U-förmig gebogenen Draht gebildet werden. Die U-förmigen Drahtelemente 4 sind an den freien Enden ihrer U-Schenkel 5 bei 8 im Griffteil verankert. Die U-Schenkel 5 sind an den dem Griffteil 3 abgewandten Enden über einen U-Steg, der hier zu einer kreisrunden Öse oder Schleife 6 ausgeformt ist, einstückig verbunden. Dabei weist jedes Drahtelement 4 an seinem freien Arbeitsende zusätzlich zu der Schleife 6 noch eine weitere Schleife 7 auf. Demgemäß sind die U-förmigen Drahtelemente 4 bei dem gezeigten Ausführungsbeispiel in ihrem freien Endbereich jeweils zu einer Mehrfachschleife, hier einer Doppelschleife 6, 7 ausgeformt. Die Drahtelemente 4 sind im übrigen mit ihren die Ausformungen aufweisenden freien Enden unabhängig voneinander federbeweglich und liegen mit ihren freien Enden, quer zur Längsachse des Schneebesens gesehen, im Abstand zueinander, wobei sie zumindest angenähert einen Flachbesen bilden. Im übrigen sind an jedem Einzelbesen 1 und 2 die Drahtelemente 4 von im wesentlichen gleicher Form und Abmessung.

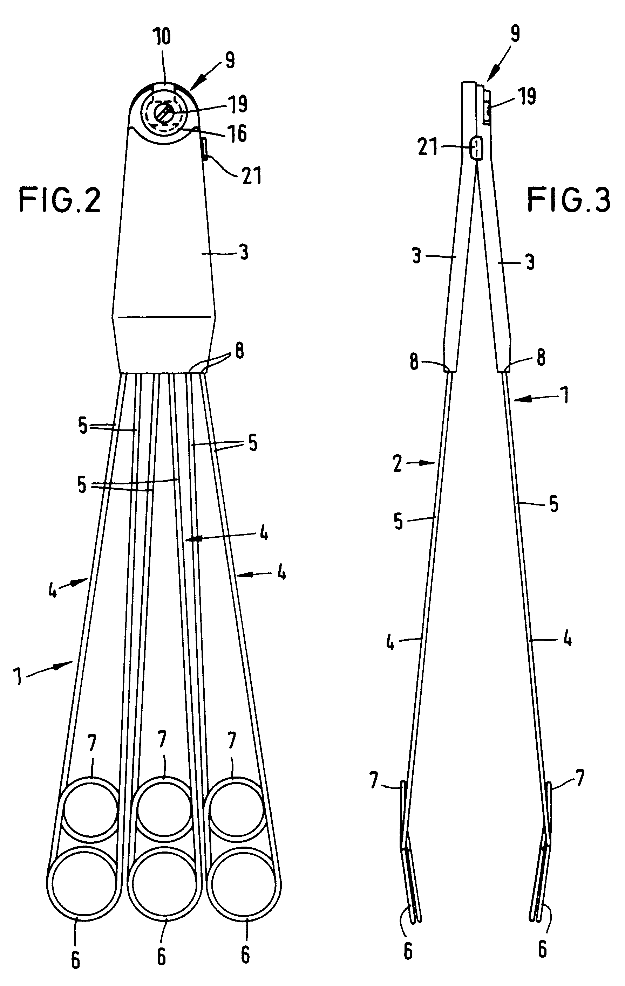

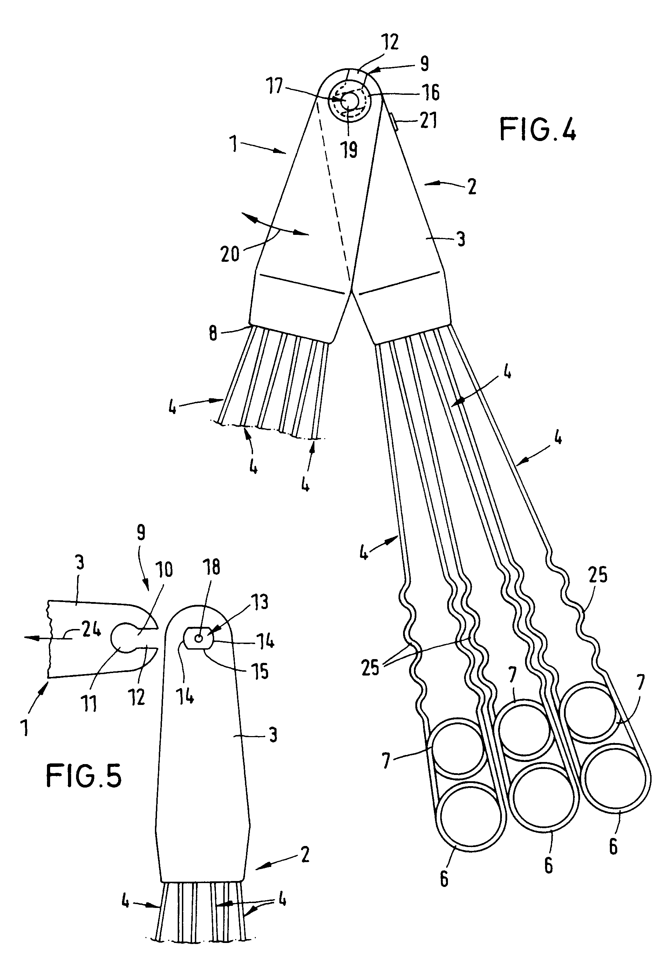

Die Einzelbesen 1 und 2 sind an den Griffteilen 3 in einem Griffgelenk 9 zu einem in der Arbeitsbreite seines Schlagkopfes einstellbaren Doppel-Schneebesen verbunden. Wie vor allem die Fig. 1, 4 und 5 zeigen, weist das Griffteil 3 des einen Einzelbesens 1 an seinem oberen Ende eine randoffene Einstecköffnung 10 auf, die aus einem Rundloch 11 und einer Schlitzöffnung 12 besteht, deren Breite kleiner ist als der Durchmesser des Rundloches 11. An dem Griffteil 3 des Einzelbesens 2 ist ein Nocken 13 fest angeordnet, der auf den beiden gegenüberliegenden Querseiten gerundete Flächen 14 und an den beiden Längsseiten Abflachungen 15 aufweist. Der Nocken 13 wird von einer (in Fig. 5 nicht gezeigten) kreisrunden Scheibe (insbesondere Fig. 1 und 2) 16 abgedeckt. Die Scheibe 16 und der Nocken 13 sind mit fluchtenden Bohrungen 17 bzw. 18 versehen. Eine die Bohrung 17 der Scheibe 16 durchfassende Schraube 19 ist in die Gewindebohrung 18 des Nockens 13 eingeschraubt und sichert damit die Scheibe 16 am Nocken 13.

Beim Zusammenbau der Einzelbesen 1 und 2 wird der Einzelbesen 1 mit seinem Griffteil 3 von der Seite her gegen das Griffteil des Einzelbesens 2 angesetzt und dann der Nocken 13 durch die Schlitzöffnung 12 in das Rundloch 13 eingeführt (entgegen der Pfeilrichtung der Fig. 5). Anschließend kann der Einzelbesen 1 gegenüber dem Einzelbesen 2 in Pfeilrichtung 20 der Fig. 4 verschwenkt werden. Das Griffgelenk 9 ist, wie ersichtlich, als Steckgelenk ausgeführt und erlaubt ein Lösen der beiden Einzelbesen 1 und 2 sowie einen Zusammenbau derselben nur in Querrichtung, d.h. in der in Fig. 5 gezeigten Lage der beiden Griffteile 3. In jeder anderen Drehlage sind die Einzelbesen 1 und 2 am Griffgelenk 9 gegen Lösen verriegelt. Es ist insbesondere den Fig. 1 und 4 zu entnehmen, daß die Einzelbesen 1 und 2 an dem Griffgelenk 9 derart miteinander schwenkbar verbunden sind, daß sie sich nach Art eines Fächers gegeneinander verschwenken bzw. ausspreizen lassen. Damit ist die Breite des Schlagkopfes in Anpassung an die Größe des jeweiligen Gefäßes einstellbar. Die kleinste Breite des Schlagkopfes liegt vor, wenn die beiden Einzelbesen 1 und 2 sich überdecken, wobei ihre Griffteile exakt übereinanderliegen (Fig, 1, 2 und 3). In dieser Schwenklage kann an dem einen Griffteil 3 ein Seitenanschlag 21 (Fig. 1 und 4) für den anderen Griffteil vorgesehen sein, so daß der betreffende Einzelbesen sich von der Anschlagposition nur in der einen Schwenkrichtung in Pfeilrichtung 20 ausschwenken läßt.

Fig. 1 zeigt die Arbeitsweise des erfindungsgemäßen Schneebesens, der von oben in das das betreffende Schlaggut enthaltende Gefäß 22 eingeführt und dann mit der am Griff 3, 3 anliegenden Arbeitshand in Pfeilrichtung 23 hin- und herbewegt wird. Eine heftige Schlagbewegung mit auf einer Kreisbahn bewegtem Schlagkopf des Schneebesens ist hierbei nicht unbedingt erforderlich. Das als Steckgelenk ausgebildete Griffgelenk 9 gestattet es, die beiden Einzelbesen 1 und 2 in der Schwenklage gemäß Fig. 5 in Pfeilrichtung 24 voneinander zu trennen, so daß sie auch unabhängig voneinander verwendbar sind. Die Einzelbesen 1 und 2 können zum Schlagen von Massen in kleinen Gefäßen, z.B. als Tassenschläger od.dgl., verwendet werden.

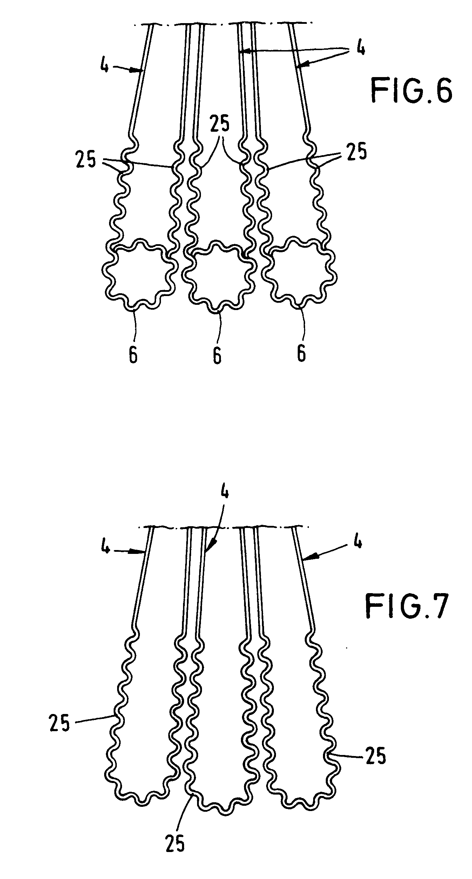

Die aus Einzel- oder Mehrfachschleifen 6, 7 ausgebildeten Drahtausformungen in den Endbereichen der Drahtelemente 4 haben sich als besonders vorteilhaft und im Hinblick auf die Schlagwirkung besonders wirksam erwiesen. Es versteht sich, daß hier aber Abweichungen von den in den Fig. 1 bis 3 gezeigten Gestaltungsformen möglich sind. Fig. 4 zeigt eine Anordnung, bei der die Drahtelemente 4 unmittelbar hinter den Doppelschleifen 6, 7 Wellungen 25 aufweisen, die auch als schraubenförmige bzw. korkenzieherartige Wendelungen ausgeführt werden könnten. Bei der in Fig. 6 gezeigten Ausführungsform weisen die Drahtelemente 4 an ihren frei beweglichen Enden jeweils nur eine einzelne Schleife 7 auf. Zugleich sind die Drahtelemente 4 an den Schleifen 7 und zweckmäßig auch an den unmittelbar dahinterliegenden Bereichen der Drahtelemente 4 gewellt bzw. schraubenförmig gewendelt ausgeführt.

Fig. 7 zeigt eine Ausführungsform eines erfindungsgemäßen Schneebesens, bei der auf die Einzel- oder Mehrfachschleifen 6, 7 an den freien Arbeitsenden der Drahtelemente verzichtet worden ist. Statt dessen sind die U-förmigen Drahtelemente in ihren Endbereichen mit Wellungen oder schraubenförmigen Wendelungen 25 versehen.

Bei allen vorstehend beschriebenen Ausführungsformen sind die Drahtelemente 4 untereinander gleich ausgebildet und von gleicher Länge. Sie liegen mit ihren frei beweglichen Arbeitsenden, welche die Drahtausformungen 6, 7 und/oder 25 aufweisen, ohne Überdeckung seitlich nebeneinander. Die Drahtelemente 4 lassen sich auch mit feinen Riffelungen od.dgl. versehen. Im allgemeinen empfiehlt es sich aber, glatte Drahtelemente aus Runddraht zu verwenden, die nur im Bereich ihrer Arbeitsenden mit den genannten Drahtausformungen versehen werden. Möglich ist auch eine Anordnung, bei der ein Teil der Drahtelemente mit gewellten oder gewendelten Drahtausformungen und ein anderer Teil der Drahtelemente mit schleifenförmigen Drahtausformungen versehen ist.

**Patentansprüche**

1. Schneebesen zum Schlagen von Eiweißschnee, Sahne, Cremes usw., bestehend aus an ihren Griffteilen (3) in einem Griffgelenk (9) verbundenen Einzelbesen (1,2), mit deren Griffteilen (3) den Schlagkopf bildende elastische Drahtelemente (4) verbunden sind, **dadurch gekennzeichnet,** daß die Einzelbesen (1,2) zur Einstellung der Arbeitsbreite des Schlagkopfes im Griffgelenk (9) etwa fächerförmig ausspreizbar und voneinander lösbar miteinander verbunden sind.

2. Schneebesen nach Anspruch 1, **dadurch gekennzeichnet,** daß das Griffgelenk (9) als Steckgelenk ausgebildet ist.

3. Schneebesen nach Anspruch 2, **dadurch gekennzeichnet,** daß die Einzelbesen (1,2) im Griffgelenk (9) mittels einer Klemmschraube (19) verbunden sind.

4. Schneebesen nach Anspruch 2 oder 3, **dadurch gekennzeichnet,** daß das Steckgelenk von einem am Griffteil (3) des einen Einzelbesens (2) angeordneten Nocken (13) und einer am Griffteil (3) des anderen Einzelbesens (1) angeordneten randoffenen Einsecköffnung (10) für den Nocken besteht.

5. Schneebesen nach einem der Ansprüche 1 bis 4, **dadurch gekennzeichnet,** daß die Einzelbesen (1,2) als Flachbesen mit mehreren im Seitenabstand zueinander angeordneten Drahtelementen (4) ausgebildet sind.

6. Schneebesen nach einem der Ansprüche 1 bis 5, **dadurch gekennzeichnet,** daß die Drahtelemente (4) der Einzelbesen (1,2) an ihrem dem Griffteil (3) abgewandten Endbereich quer zur Drahtachse gerichtete örtliche Drahtausformungen (6,7,25) aufweisen, wobei die freien Enden der Drahtelemente, quer zur Achse des Schneebesens gesehen, im Abstand nebeneinanderliegen.

7. Schneebesen nach Anspruch 6, **dadurch gekennzeichnet,** daß die Drahtausformungen aus Einzel- oder Mehrfachschleifen (6,7) der Drahtelemente (4) bestehen.

8. Schneebesen nach Anspruch 6 oder 7, **dadurch gekennzeichnet,** daß die Drahtausformungen aus Wellungen oder schraubenförmigen Wendelungen (25) der Drahtelemente (4) bestehen.

9. Schneebesen nach einem der Ansprüche 6 bis 8, **dadurch gekennzeichnet,** daß die federelastischen Drahtelemente (4) mit ihren die Drahtausformungen aufweisenden freien Enden ohne Überdeckung neben- oder hintereinanderliegen.

10. Schneebesen nach einem der Ansprüche 6 bis 9, **dadurch gekennzeichnet,** daß die Drahtelemente (4) im Bereich ihrer Schleifen (6,7) geriffelt, gewellt bzw. gewendelt sind.

11. Schneebesen nach einem der Ansprüche 6 bis 10, **dadurch gekennzeichnet,** daß die Drahtelemente (4) etwa U-förmig gebogen sind, wobei ihre im Griffteil eingebundenen Schenkel (5) an ihren dem Griffteil (3) abgewandten, die Drahtausformungen (6,7,25) aufweisenden Enden über U- oder schleifenförmige Umbiegungen einstückig verbunden sind.

12. Schneebesen nach einem der Ansprüche 1 bis 11, **dadurch gekennzeichnet,** daß die Drahtelemente (4) mit ihren Drahtausformungen (6,7,25) untereinander gleich und zweckmäßig auch gleich lang ausgebildet sind.

## Claims

1. Egg whisk for beating egg white, cream, creamy fillings etc., comprising individual whisks (1, 2) which are connected at their grip parts (3) in a grip joint (9) and to the grip parts (3) of which there are connected flexible wire elements (4), forming the beating head, characterised in that, for setting the working width of the beating head, the individual whisks (1, 2) are interconnected in the grip joint (9) in such a way that they can be spread out rather in the manner of a fan and can be released from one another.

2. Egg whisk according to Claim 1, characterised in that the grip joint (9) is designed as a plug-in joint.

3. Egg whisk according to Claim 2, characterised in that the individual whisks (1, 2) are connected in the grip joint (9) by means of a clamping screw (19).

4. Egg whisk according to Claim 2 or 3,characterised in that the plug-in joint comprises a cam (13), which is arranged on the grip part (3) of the one individual whisk (2), and an insert opening (10) for the cam, which opening is open at the edge and is arranged on the grip part (3) of the other individual whisk (1).

5. Egg whisk according to one of Claims 1 to 4, characterised in that the individual whisks (1, 2) are designed as flat whisks having a plurality of wire elements (4) arranged laterally spaced apart.

6. Egg whisk according to one of Claims 1 to 5, characterised in that the wire elements (4) of the individual whisks (1, 2) have at their end region remote from the grip part (3) local wire formations (6, 7, 25) directed transversely to the wire axis, the free ends of the wire elements lying at intervals next to one another, seen transversely to the axis of the egg whisk.

7. Egg whisk according to Claim 6, characterised in that the wire formations comprise individual or multiple loops (6, 7) of the wire elements (4).

8. Egg whisk according to Claim 6 or 7, characterised in that the wire formations comprise undulations or helical spiralings (25) of the wire elements (4).

9. Egg whisk according to one of Claims 6 to 8, characterised in that the resilient wire elements (4) lie with their free ends having the wire formations next to or behind one another without one covering the other.

10. Egg whisk according to one of Claims 6 to 9, characterised in that the wire elements (4) are grooved, undulated or spiralled in the region of their loops (6, 7).

11. Egg whisk according to one of Claims 6 to 10, characterised in that the wire elements (4) are bent rather in the shape of a U, their limbs (5) anchored in the grip part being integrally connected at their ends remote from the grip part (3), having the wire formations (6, 7, 25), via U-shaped or loop-shaped bends.

12. Egg whisk according to one of Claims 1 to 11, characterised in that the wire elements (4) with their wire formations (6, 7, 25) are the same as one another and are expediently also of the same length.

## Revendications

1. Fouet pour battre des blancs d'oeufs en neige, des crèmes, etc, constitué de fouets individuels (1, 2) assemblés par leurs parties de préhension (3) dans une articulation de poignée (9), des éléments élastiques (41 en fil métallique, constituant la tête de battage, étant assemblés aux parties de préhension (3), **caractérisé** en ce que les fouets individuels (1, 2), afin de régler la largeur de travail de la tête de battage, sont mutuellement assemblés dans l'articulation de poignée (9) en pouvant être écartés approximativement en éventail et détachés l'un de l'autre.

2. Fouet selon la revendication 1, caractérisé en ce que l'articulation de poignée (9) est conçue comme articulation à engagement.

3. Fouet selon la revendication 2, caractérisé en ce que les fouets individuels (1, 2) sont assemblés dans l'articulation de poignée (9) au moyen d'une vis de serrage (19).

4. Fouet selon la revendication 2 ou 3, caractérisé en ce que l'articulation à engagement est constituée d'un tenon (13) disposé sur la partie de préhension (3) d'un (2) des fouets individuels, et d'une ouverture (10) à bord ouvert pour l'engagement du tenon, disposée sur la partie de préhension (3) de l'autre fouet individuel (1).

5. Fouet selon l'une des revendications 1 à 4, caractérisé en ce que les fouets individuels (1, 2) sont réalisés sous forme de fouets plats avec plusieurs éléments (4) en fil métallique disposés à distance latérale les uns des autres.

6. Fouet selon l'une des revendications 1 à 5, caractérisé en ce que les éléments (4) en fil métallique des fouets individuels (1, 2) présentent, sur leur région terminale éloignée de la partie de préhension (3), des formations locales (6, 7, 25) orientées transversalement à l'axe du fil métallique, les extrémités libres des éléments en fil métallique, vues transversalement à l'axe du fouet, étant juxtaposées à distance entre elles.

7. Fouet selon la revendication 6, caractérisé en ce que les formations de fil métallique sont constituées de boucles simples ou multiples (6, 7) des éléments (4) en fil métallique.

8. Fouet selon la revendication 6 ou 7, caractérisé en ce que les formations en fil métallique sont constituées d'ondulations ou de spires hélicoïdales (25) des éléments (4) en fil métallique.

9. Fouet selon l'une des revendications 6 à 8, caractérisé en ce que les extrémités libres, présentant les formations, des éléments élastiques (4) en fil métallique se trouvent les unes à côté ou derrière les autres sans chevauchement.

10. Fouet selon l'une des revendications 6 à 9, caractérisé en ce que les éléments (4) en fil métallique sont cannelés, ondulés ou triés dans la région de leurs boucles (6, 7).

11. Fouet selon l'une des revendications 6 à 10, caractérisé en ce que les éléments (4) en fil métallique sont recourbés approximativement en U, leurs branches (5) incorporées dans la partie de préhension étant, à leurs extrémités éloignées de la partie de préhension (3) et présentant les formations en fil métallique (6, 7, 25), assemblées d'un seul tenant par des courbures en U ou en boucle.

12. Fouet selon l'une des revendications 1 à 11, caractérisé en ce que les éléments (4) en fil métallique et leurs formations (6, 7, 25) sont réalisés avec des configurations identiques et avantageusement de la même longueur.

FIG.1

FIG.2

FIG.3

FIG.4

FIG.5

FIG.6

FIG.7